# EUROPÄISCHE PATENTSCHRIFT

(11) **EP 0 537 422 B1**
(45) Veröffentlichungstag und Bekanntmachung des Hinweises auf die Patenterteilung: **04.10.1995**
(21) Anmeldenummer: 92111969.9
(22) Anmeldetag: 14.07.1992
(51) Int. Cl.: B01D 21/24, C02F 1/00

(54) **Vorrichtung zur zentrischen Beschickung von Rundbecken durch Abwasser**
Device for the central supply of waste water in a circular settling tank
Dispositif pour l'alimentation centrale des eaux usées dans un bassin circulaire de sédimentation

(30) Priorität: 17.10.1991 DE 4134388
(43) Veröffentlichungstag der Anmeldung: 21.04.1993
(73) Patentinhaber: FELDER, Anton, D-87435 Kempten (DE)
(72) Erfinder: Felder, Anton, Dipl.-Ing., D-87435 Kempten (DE); Valentin, Franz, Prof., W-8000 München 2 (DE)
(74) Vertreter: Lewald, Dietrich, Dipl.-Ing.

(56) Entgegenhaltungen:
- DE-A- 3 818 624
- FR-A- 2 314 146
- US-A- 4 297 221

## Beschreibung

Die Erfindung betrifft eine Vorrichtung zur zentrischen Beschickung von Rundbecken durch Abwasser mittels einer vertikalen Rohrleitung.

Im Bereich der Abwassertechnik werden in bekannter Weise Rundbecken mit beträchtlichen Durchmessern auf Klärwerken von Kommunen zur Vorklärung oder als Nachklärbecken zur Schlammtrennung hinter der Belebung eingesetzt. Gemeinsam ist diesen Rundbecken, daß der Zufluß im Zentrum des Rundbeckens über eine vertikal in das Becken hineinführende Rohrleitung erfolgt. Der Strahl wird anschließend durch Konstruktionen unterschiedlichster Ausführung in die Horizontale umgelenkt, um dadurch eine möglichst gleichmäßige radialsymmetrische Abströmung in das Rundbecken zu erreichen. Alle diese Vorrichtungen haben jedoch den Nachteil, daß sie zum einen konstruktiv sehr aufwendig sind und keine gezielte Führung der Radialströmung möglich ist, um z.B. mögliche Dichteunterschiede, die aufgrund der Unterschiede von Temperatur und des Feststoffgehaltes zwischen Strahl und Außenströmung vorhanden sind, zu kompensieren.

Der technologische Hintergrund ist, daß durch die Sedimentation der Schlammpartikeln im Becken die Dichte des Fluids verändert wird. Die Beschickung erfolgt über ein sogenanntes "Mittelbauwerk". Nach dem Austritt des Fluids vom Mittelbauwerk in den Außenraum kommen die Dichteunterschiede der Suspension gegenüber dem Klarwasser zur Wirkung.

In radialer Richtung bewirkt die Geometrie des Rundbeckens eine starke Verzögerung der Strömung in Fließrichtung. Da verzögerte Bewegungen allgemein sehr empfindlich auf Störungen reagieren und die Tendenz zur Ablösung vorhanden ist, ist die sorgfältige Führung der Radialströmung von großem Wert. Hierbei ist zu beachten, daß beim Ausstromen in den Außenbereich der feststoffbeladene Strom entsprechend seiner höheren Dichte insgesamt nach unten abgelenkt wird (Prof. Valentin, Lehrstuhl für Hydraulik und Gewässerkunde, Technische Universität München, Abtl. 50, 1988 ISSN 0343-1177).

Der Erfindung liegt die Aufgabe zugrunde, eine kontruktiv einfache Vorrichtung zur zentrischen Beschickung von Rundbecken durch Abwasser zu schaffen, bei welcher die Umlenkung eines vertikalen Strahls und eine gleichmäßige radialsymmetrische Verteilung der Strömung erreicht werden soll. Auch soll die neue Vorrichtung in der Lage sein, der Tatsache entgegenzuwirken, daß feststoffbeladene Fluidstrahlen beim Abströmen aus der Vorrichtung in das Rundbecken entsprechend ihrer höheren Dichte nach unten abgelenkt werden.

Erreicht wird dies erfindungsgemäß überraschend dadurch, daß eine zentrisch eingesetzte horizontale kreisrunde Steuerscheibe im Bereich des Übergangs von der vertikalen Rohrleitung zu einer ansatzlos kontinuierlich anschließenden trompetenförmigen Aufweitung, wobei die Steuerscheibe mit dem Innenumfang der Berandung einen Ringspalt bildet.

Es wird nicht verkannt, daß an sich Vorrichtungen und Verfahren bekannt sind, die unter Ausnutzung des sogenannten Coanda-Effekts einem Gas oder Flüssigkeitsstrahl eine andere Richtung verleihen. Nicht jedoch in der Abwassertechnik.

Bekanntlich ist bei diesen Mittelbauwerken die Dichte am Eintritt größer als die Dichte später. Durch die höhere Dichte geht aber die Strömung nach unten und wirbelt den abgelagerten Schlamm wieder auf. In der Praxis war dabei anstatt der geforderten 80% nur ein Wirkungsgrad von 60% erreichbar. Hier bedeutet die Maßnahme nach der Erfindung einen überraschenden Schritt nach vorne.

Die mit der Erfindung erzielten Vorteile bestehen insbesondere darin, daß die Umlenkung und Führung des Strahles nach dem Ausströmen über den Ringspalt, an der Berandung des trompetenförmigen bzw. torusähnlichen Körpers unter Ausnutzung des Coanda-Effekts erfolgt und daher exakt vorhersagbar ist. Die Austrittsgeschwindigkeit über den gesamten Umfang des Ringspaltes ist konstant und hängt lediglich vom Staudruck ab. Desweiteren ist die Aufweitung des Strahls durch die turbulente Einmischung der Außenströmung, die gewünschte Abnahme der Strahlgeschwindigkeit und das Ablösekriterium an der Berandung des trompetenförmigen bzw. torusähnlichen Körpers vorhersagbar.

Unter trompetenförmig wird ein ringförmiger Körper verstanden, der beispielsweise aus der reinen Vertikalen im kontinuierlichen Übergang bis in die Horizontale oder fast in die Horizontale umlenkt. Coanda-Effekt am Austritt bedeutet, daß die Strömung an der Berandung angelegt verbleibt.

Nach einer vorteilhaften Ausführungsform der Erfindung kann durch Variieren des Umlenkwinkels β des trompetenförmigen oder torusähnlichen Körpers gezielt die Richtung des in das Rundbecken einfließenden Strahls beeinflußt werden, da der Ablösepunkt exakt vorgegeben wird. Dadurch wird es möglich, Dichteunterschiede, die aufgrund der Unterschiede von Temperatur und Feststoffgehalt zwischen Strahl und Außenströmung vorhanden sind, zu kompensieren. Bei entsprechendem Staudruck und einem entsprechenden Verhältnis des Torusradius bzw. des Radius R des trompetenförmigen Körpers zur Rindspaltbreite können an der Berandung des trompetenförmigen Körpers Umlenkungen von bis zu 180° erreicht werden.

Wichtig ist, daß zweckmäßig die Vorrichtung nach der Erfindung es möglich macht, die Austrittsfläche des Ringspalts durch Austausch der Steuerscheiben zu verändern. So ist es möglich, nachträglich auf einfache Weise Anpassungen an betriebliche Änderungen vorzunehmen. Eine zweckmäßige Ausgestaltung ist in weiteren Unteransprüchen gegeben. Zweckmäßig wird über den gesamten Umfang des trompetenförmigen Körpers in gleichen Abständen und unter einem bestimmten Winkel zur Anströmrichtung als Aufsatz eine Lamellenringanordnung vorzusehen sein. Dies ist eine besonders einfache und zuverlässige Art, dem Strahl zur Radialkomponente eine zusätzliche Tangentialkomponente aufzuprägen. Dadurch wird primär der Fließweg im Rundbecken verlängert, was bei den Klärbecken zu einer besseren Sedimentation und zum sogenannten Teetasseneffekt führt.

Außerdem kann bei der Ausführungform mit dem Lamellenaufsatz durch gleichmäßiges Verdrehen aller Lamellen um einen vorgegebenen Winkel zur Anströmrichtung auch die Größe der Tangentialkomponente beeinflußt werden.

In weiterer Ausgestaltung der Erfindung kann die Vorrichtung um ihre horizontale Achse um 180° gedreht sein. Dies vor allem dann, wenn z.B. aus betrieblichen Erfordernissen die Versorgungsleitung vertikal von oben anstatt von unten in das Rundbecken eingeführt wird.

Gegenstand der Erfindung ist auch ein Verfahren zur Beschickung von Rundbecken. Dieses Verfahren zeichnet sich dadurch aus, daß der Coanda-Effekt zur Umlenkung und Führung des vertikalen Beschickungsstrahls in die Horizontale und zur Herbeiführung einer radialsymmetrischen Verteilung herangezogen wird.

Nach einer besonderen Ausgestaltung der Erfindung kann auch um 180° gedreht gearbeitet werden.

Beispielsweise Ausführungsformen der Erfindung sollen nunmehr mit Bezug auf die beiliegenden Zeichnungen näher erläutert werden. Diese zeigen in:
- Fig. 1: eine Draufsicht auf eine erste Ausführungsform;
- Fig. 2: eine geschnittene Seitenansicht zur Fig. 1;
- die Fig. 3: bis 6 Variations- und Ergänzugsmöglichkeiten zu der in Fig. 1 gezeigten Ausführungsform.

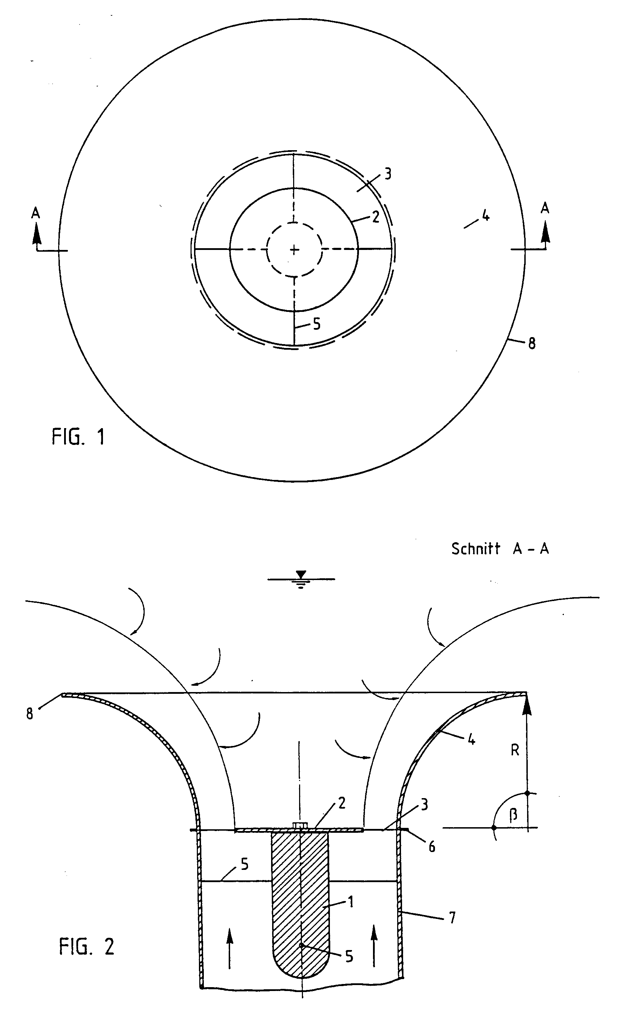

Bei der in Fig. 1 und 2 dargestellten Ausführungsform der Erfindung ist ein trompetenförmiger oder torusähnlicher Körper (4), im folgenden trompetenförmiger Körper genannt, vorgesehen. Zur Erzeugung des Ringspaltes (3) wird auf Höhe des Flansches eine kreisrunde Steuerscheibe (2) eingebracht, deren Durchmesser kleiner sein muß als der Innendurchmesser der vertikalen Rohrleitung (7). Die Befestigung der Steuerscheibe (2) erfolgt auf einem zentrisch in der vertikalen Rohrleitung (7) befindlichen Vollzylinder (1), der beim Anströmen gemäß der Pfeilrichtung auch als Strahlteiler wirkt. Der Vollzylinder (1) ist seinerseits wieder über vier Zentrierstangen (5) an der vertikalen Rohrleitung (7) befestigt. Ein Kurvator-Effekt stellt sich ein. Zwangsweise bei etwa 85° Umlenkung stellt sich Strahlablösung ein.

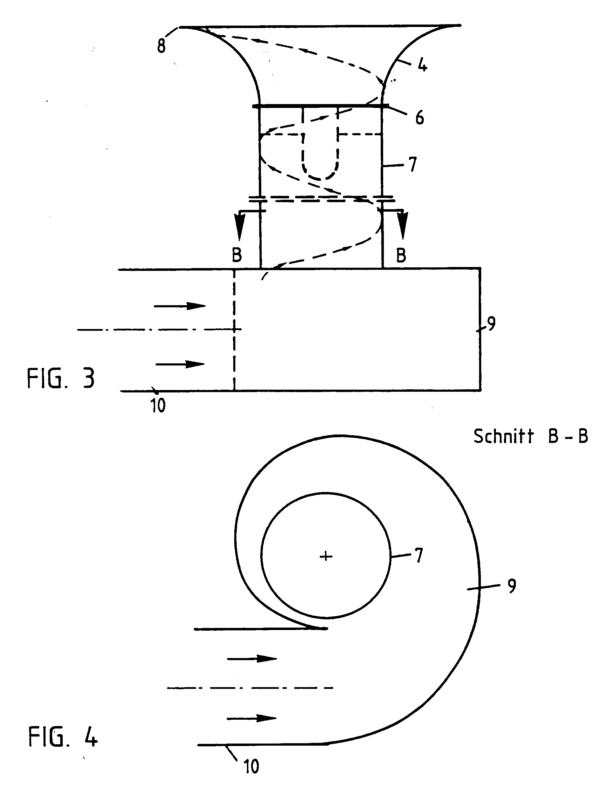

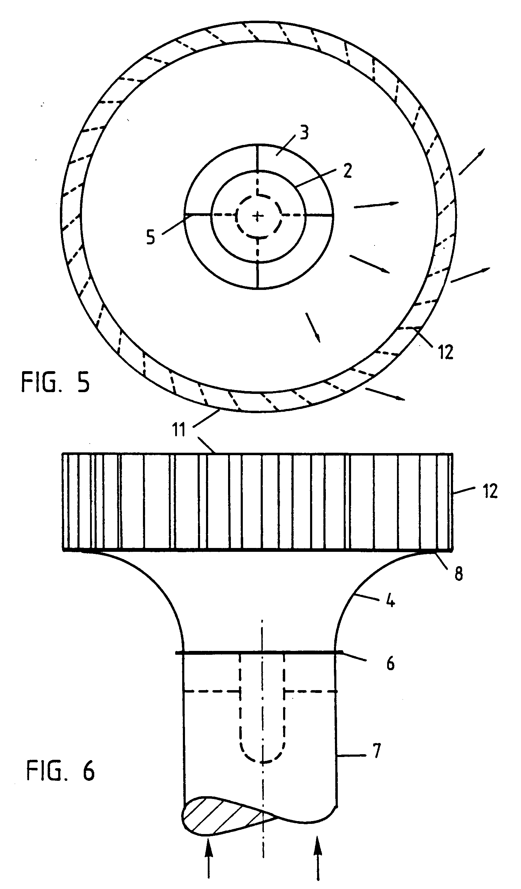

Die Fig. 3 und 4 zeigen eine Ausführungsform in Verbindung mit einer Drallkammer (9). Über die horizontale Rohrleitung (10) wird gemäß der Pfeilrichtung das Abwasser in die Drallkammer (9) eingeleitet. Die so erzeugte spiralförmige Strömung verläßt die Drallkammer (9) über die vertikale Rohrleitung (7). Die spiralförmige Bewegung der Strömung wird auch nach dem Austritt über den Ringspalt (3) beibehalten und bewirkt dadurch, daß nach der Umlenkung der Vertikalströmung an der Berandung des trompetenförmigen Körpers (4) zur Radialkomponente eine zusätzliche Tangentialkomponente vorhanden ist. Es stellt sich eine Spiralströmung ein und der Weg wird größer, die Strömungsgeschwindigkeit wird sehr stark reduziert, beispielsweise von 1 m/sek. bis auf 10 cm/sek. Durch die Anordnung der Drallkammer wird die Verzerrung der Rohrströmung durch das Geschwindigkeitsprofil kompensiert.

Die Fig. 5 und 6 zeigen in einer abgewandelten Ausführungsform, einen Aufsatz (11; 12) auf dem trompetenförmigen oder torusähnlichen Körper. Dieser ist an der Abreißkante (4), dort, wo sich die Strömung an der Berandung des trompetenförmigen Körpers (4) ablöst mit solchen Lamellen (12) vorgesehen. Die Lamellen (12) sind in gleich großen Abständen um die Abreißkante (8) des trompetenförmigen Körpers (4) verteilt und werden oben durch einen Ring (11) und unten durch Köcher, die an der Abreißkkante (8) des trompetenförmigen Körpers (4) befestigt sind, gehalten. Hierdurch wird dem Strahl zur Radialkomponente eine zusätzliche Tangentialkomponente aufgeprägt. Eine Folge ist, daß der Fließweg im Rundbecken verlängert wird. Dies wiederum hat eine bessere Sedimentation zur Folge und führt zum sogenannten Teetasseneffekt. Die Lamellen (12) können gleichmäßig, beispielsweise um einen vorgegebenen Winkel, zur Anströmrichtung gedreht werden, wodurch auch die Größe der Tangentialkomponente beeinflußt werden kann.

Zur Definition des Torus ist nachzutragen, daß dieser als Rotationskörper als aus einer konvex gekrümmten kontinuierlichen Raumkurve entstanden anzusehen ist, wobei "trompetenförmig" als vereinfachte Definition anzusehen ist.

## Patentansprüche

1. Vorrichtung zur zentrischen Beschickung von Rundbecken durch Abwasser mittels einer vertikalen Rohrleitung, **gekennzeichnet** durch eine zentrisch eingesetzte horizontale kreisrunde Steuerscheibe (2) im Bereich des Übergangs von der vertikalen Rohrleitung (7) zu einer ansatzlos kontinuierlich anschließenden trompetenförmigen Aufweitung (4), wobei die Steuerscheibe (2) mit dem Innenumfang der Berandung einen Ringspalt (3) bildet.

2. Vorrichtung nach Anspruch 1, dadurch **gekennzeichnet,** daß die trompetenförmige Aufweitung ein eigener sich trompetenförmig aufweitender Körper (4) ist, der über einen Flansch (6) an die Rohrleitung (7) angeschlossen ist.

3. Vorrichtung nach einem der vorhergehenden Ansprüche, **gekennzeichnet** durch Ausnutzung des Coanda-Effekts, derart, daß eine Umlenkung des vertikalen Strahls in die Horizontale als auch eine horizontalsymmetrische Verteilung herbeiführbar ist.

4. Vorrichtung nach einem der vorhergehenden Ansprüche, dadurch **gekennzeichnet,** daß der Umlenkwinkel (β) des trompetenförmigen bzw. torusähnlichen Körpers (4) veränderbar ausgebildet ist.

5. Vorrichtung nach einem der vorhergehenden Ansprüche, **gekennzeichnet** durch Steuerscheiben (2) unterschiedlicher Größe und Form zur Veränderung der Austrittsfläche des Ringspalts (3)

6. Vorrichtung nach einem der vorhergehenden Ansprüche, dadurch **gekennzeichnet** daß über den gesamten Umfang des trompetenförmigen oder torusähnlichen Körpers (4) in gleichen Abständen und unter einem bestimmten Winkel zur Anströmrichtung Aufsatzlamellem (12) in Ringanordnung angeordnet sind.

7. Vorrichtung nach einem der vorhergehenden Ansprüche, dadurch **gekennzeichnet,** daß sie über eine an sich bekannte vorgeschaltete Drallkammer (Fig. 3; 9) beaufschlagt ist.

8. Vorrichtung nach einem der vorhergehenden Ansprüche **gekennzeichnet** durch eine um 180° um die horizontale Achse der Vorrichtung gedrehte Betriebsstellung, wobei die Beschickung von oben erfolgt.

9. Verfahren zur zentrischen Beschickung von Rundbecken durch Abwasser in vertikaler Eintrittsströmung, dadurch **gekennzeichnet,** daß der Coanda-Effekt zur Umlenkung und Führung des vertikalen Beschickungsstrahls in die Horizontale und zur Herbeiführung einer radialsymmetrischen Verteilung herangezogen wird.

10. Verfahren nach Anspruch 9, dadurch **gekennzeichnet,** daß um 180° um die Horizontale gedreht gearbeitet wird, wobei die Beschickung von oben erfolgt.

## Claims

1. Device for the central charging of circular tanks with waste water by means of a vertical pipeline, characterized by a centrally inserted horizontal circular control disc (2) in the region of transition from the vertical pipeline (7) to a seamlessly adjoining trumpet-shaped widening (4), the control disc (2) forming, with the inner circumference of the border, an annular gap (3).

2. Device according to Claim 1, characterized in that the trumpet-shaped widening is a separate body (4) which widens in the shape of a trumpet and is connected to the pipeline (7) via a flange (6).

3. Device according to one of the preceding claims, characterized by utilization of the Coanda effect such that a deflection of the vertical jet into the horizontal and also horizontally symmetrical distribution can be produced.

4. Device according to one of the preceding claims, characterized in that the deflection angle (β) of the trumpet-shaped or toroidal body (4) is designed such that it can be changed.

5. Device according to one of the preceding claims, characterized by control discs (2) of different sizes and shapes for changing the outlet surface of the annular gap (3).

6. Device according to one of the preceding claims, characterized in that attachment lamellae (12) are arranged in annular fashion, at regular intervals and at a specific angle with respect to the onflow direction, over the entire circumference of the trumpet-shaped or toroidal body (4).

7. Device according to one of the preceding claims, characterized in that it is acted upon by an upstream swirl chamber (Figures 3; 9) known per se.

8. Device according to one of the preceding claims, characterized by an operating position rotated through 180° about the horizontal axis of the device, charging taking place from the top.

9. Process for the central charging of circular tanks with waste water with vertical inlet flow, characterized in that the Coanda effect is used for deflecting and guiding the vertical charging jet into the horizontal and for producing a radially symmetrical distribution.

10. Process according to Claim 9, characterized in that operation takes place in a state rotated through 180° about the horizontal, charging taking place from the top.

## Revendications

1. Dispositif pour introduire en alimentation centrale des eaux usées dans des bassins circulaires, à l'aide d'une canalisation verticale, caractérisé par un disque de commande (2), circulaire, horizontal, en position centrale, dans la zone de la transition entre la canalisation verticale (7) et un évasement (4), en forme de trompette, se raccordant d'une manière continue et sans épaulement à la canalisation, le disque de commande (2) formant, avec la circonférence intérieure du bord, une fente annulaire (3).

2. Dispositif selon la revendication 1, caractérisé en ce que l'évasement en forme de trompette est un corps (4), particulier, s'évasant en forme de trompette, et raccordé par l'intermédiaire d'une bride (6) à la canalisation (7).

3. Dispositif selon l'une des revendications précédentes, caractérisé par l'utilisation de l'effet Coanda, par le fait qu'il peut provoquer une déviation du jet vertical vers l'horizontale, tout comme une distribution symétrique par rapport à l'horizontale.

4. Dispositif selon l'une des revendications précédentes, caractérisé en ce que l'angle de déviation (β) du corps (4) en forme de trompette ou toroïde est conçu de façon à être variable.

5. Dispositif selon l'une des revendications précédentes, caractérisé par des disques de commande (2) de tailles et de formes différentes, destinés à modifier la surface de sortie de la fente annulaire (3).

6. Dispositif selon l'une des revendications précédentes, caractérisé en ce que, sur toute la périphérie du corps (4) en forme de trompette ou toroïde, des lamelles (12) sont disposées en configuration annulaire, équidistantes, et faisant un certain angle avec le sens de l'écoulement arrivant.

7. Dispositif selon l'une des revendications précédentes, caractérisé en ce qu'il reçoit les eaux par l'intermédiaire d'une chambre à turbulence (Figure 3 ; 9) connue en soi, montée en amont.

8. Dispositif selon l'une des revendications précédentes, caractérisé par une position de marche ayant subi une rotation de 180° par rapport à l'axe horizontal du dispositif, l'alimentation s'effectuant par le haut.

9. Procédé pour introduire des eaux usées en alimentation centrale dans des bassins circulaires, selon un écoulement d'entrée vertical, caractérisé en ce qu'on utilise l'effet Coanda pour dévier et guider vers l'horizontale le jet d'alimentation vertical, et pour provoquer une distribution à symétrie radiale.

10. Procédé selon la revendication 9, caractérisé en ce qu'on travaille après rotation de 180° autour de l'horizontale, l'alimentation s'effectuant par en haut.
